# FASCICULE DE BREVET EUROPEEN

(11) **EP 3 900 278 B1**
(45) Date de publication et mention de la délivrance du brevet: **15.01.2025**
(21) Numéro de dépôt: 19848889.2
(22) Date de dépôt: 19.12.2019
(51) Int. Cl.: H04L 51/58

(54) **PROCEDE DE SURVEILLANCE DU MODE DE TERMINAISON D'UN MESSAGE TELEPHONIQUE**
VERFAHREN ZUR ÜBERWACHUNG DES ABSCHLUSSMODUS EINER TELEFONNACHRICHT
METHOD FOR MONITORING THE MODE OF TERMINATION OF A TELEPHONE MESSAGE

(30) Priorité: 21.12.2018 FR 1873905
(43) Date de publication de la demande: 27.10.2021
(73) Titulaire: Araxxe, 69003 Lyon (FR)
(72) Inventeur: LESAGE, Xavier, 92200 NEUILLY SUR SEINE (FR); SCHOLER, Christophe, 69100 VILLEURBANNE (FR); PERRON, Lilian, 69003 LYON (FR); FORISSIER, Vincent, 69160 TASSIN LA DEMI-LUNE (FR)
(74) Mandataire: Cabinet Didier Martin
(86) Numéro de dépôt international: PCT/FR2019/053216
(87) Numéro de publication internationale: WO 2020/128373

(56) Documents cités:
- EP-A1- 2 899 960
- WO-A1-01/06752
- US-A1- 2012 226 613

## Description

### DOMAINE TECHNIQUE

La présente invention concerne un procédé de surveillance du mode de terminaison d'un message téléphonique, en particulier d'un message téléphonique textuel de type SMS (pour *« Short Message Service »*) ou MMS (pour *« Multimedia Messaging Service »*)*,* et plus généralement tout message téléphonique dont l'émission repose sur l'usage d'un identifiant d'émetteur, également appelé *« SenderID »,* et d'un identifiant d'équipement de routage, également appelé *« Global Title ».*

Le domaine de l'invention est le domaine des communications non synchronisées émises vers des numéros de téléphone mobile, et en particulier le domaine des communications par messages téléphoniques tels que par exemple des messages SMS ou MMS.

### TECHNIQUE ANTERIEURE

De plus en plus d'acteurs recourent à des messages téléphoniques, de type SMS, en vue par exemple de valider une transaction bancaire, ou d'authentifier l'identité d'un utilisateur. Ces messages téléphoniques sont généralement envoyés, sur requête d'un acteur, par un opérateur vers un terminal mobile que l'utilisateur détient, et qui est associé à un numéro de téléphone mobile renseigné par l'utilisateur.

Il arrive que l'émission d'un tel message téléphonique, et en particulier sa terminaison vers le terminal mobile de l'utilisateur, soit réalisée par une entité tierce, autre que l'opérateur à qui l'acteur a confié l'émission du message. Ces entités peuvent utiliser des SIM Box exploitant des abonnements illimités d'un opérateur, pour réaliser la terminaison des messages téléphoniques, aux dépens de ce même opérateur ou d'autres opérateurs.

Qui plus est, les messages téléphoniques peuvent comprendre des données confidentielles telles que des codes d'authentification ou de validation. Leur terminaison par des entités tierces non approuvées peut mettre en péril la confidentialité de ces données et diminue la sécurité des opérations utilisant ces données.

On connaît du brevet FR 3 016 761 B1 un procédé de détection de contournements qui prévoit d'inscrire un code dans un message téléphonique de test et de l'envoyer depuis un robot émetteur vers un robot récepteur. Ce procédé ne peut pas être appliqué au cas décrit plus haut car, dans ce cas particulier, d'une part le message téléphonique est confidentiel, le contenu et les caractéristiques du message sont propres à chaque acteur, et généré par l'acteur pour le compte de qui il est envoyé, et d'autre part il n'est pas possible d'utiliser un robot test pour l'émission du message.

L'invention a pour but de pallier les inconvénients précités.

Un autre but de l'invention est de proposer un procédé de surveillance du mode de terminaison des messages téléphoniques en vue d'améliorer la confidentialité des données contenues dans ces messages.

Un autre but de l'invention est de proposer un procédé de surveillance du mode de terminaison des messages téléphoniques en vue de préserver la sécurité des opérations sensibles utilisant ces données.

Encore un autre but de l'invention est de proposer un procédé de surveillance du mode de terminaison des messages téléphoniques en vue de détecter une situation à risque à l'encontre de la confidentialité et de la sécurité desdits messages.

### EXPOSE DE L'INVENTION

L'invention permet d'atteindre au moins l'un des buts précités par un procédé selon la revendication indépendante n° 1.

Au sens de l'invention, on entend par l'expression « mode de terminaison », la manière selon laquelle un message téléphonique est routé, acheminé, jusqu'à un numéro cible, c'est-à-dire par l'intermédiaire de quel moyen technique en particulier ou de quelle succession particulière de moyens techniques, intégré(s) dans ou interfacés avec un ou plusieurs réseaux de télécommunications, ledit message téléphonique est effectivement acheminé jusqu'audit numéro cible.

Ainsi, pour un message téléphonique, le procédé selon l'invention permet de détecter le déclencheur du message en fonction d'un motif préalablement mémorisé et associé audit déclencheur. Ce motif peut se trouver dans le corps ou l'entête du message. Ce motif fait partie du contenu du message, et n'est pas, en tant que tel, un code de vérification ajouté au contenu dudit message. En particulier, il peut avantageusement rester inchangé pour une pluralité de messages envoyés par le déclencheur ou pour le compte du déclencheur.

Par conséquent, le procédé selon l'invention ne nécessite pas une inscription d'un code de vérification dans le message, changeant d'un message à l'autre, comme c'est le cas dans le procédé décrit dans le brevet FR-3 016 761 B. Il n'est donc pas nécessaire d'avoir accès au contenu dudit message côté émission.

Eventuellement, le message téléphonique peut comprendre une pluralité de motifs préalablement mémorisés et associés audit déclencheur. Ladite étape de détection, dans ledit message, d'un motif préalablement mémorisé, vise alors avantageusement la détection d'au moins un motif parmi une telle pluralité de motifs.

Le motif détecté permet d'identifier, en réception, d'une part un message émis par ou pour le compte d'un déclencheur, et d'autre part ledit déclencheur lui-même. Une fois le déclencheur identifié, l'identifiant d'émetteur en réception, et/ou l'identifiant de l'équipement de routage utilisé(s) pour la livraison du message au numéro cible, est (sont) utilisé(s) pour déterminer si le message a été délivré, ou terminé, suivant un circuit standard (correspondant donc à un mode de terminaison attendu, légitime) ou par contournement du routage mobile attendu.

Suivant un exemple nullement limitatif, pour un déclencheur donné, si l'identifiant d'émetteur en réception d'un message est différent d'un identifiant d'émetteur (ou d'un type d'identifiant d'émetteur) utilisé pour la livraison des messages pour le compte de ce déclencheur, alors cela indique que ledit message a été délivré par un circuit, différent du circuit standard, pouvant comporter un contournement des règles de routage de téléphonie mobile. Un raisonnement similaire s'applique au numéro d'équipement de routage.

Dans la présente demande, on entend par *« identifiant d'émetteur »,* le paramètre « *SenderID »* selon la convention télécom en vigueur. Par conséquent, dans la suite les expressions « *SenderID »* et *« identifiant d'émetteur* » peuvent être utilisées indifféremment.

Dans la présente demande, on entend par *« identifiant de l'équipement de routage »,* le paramètre « *Global Title* » selon la convention télécom en vigueur. Par conséquent, dans la suite les expressions « *Global Title* » et *« identifiant de l'équipement de routage »* peuvent être utilisées indifféremment.

Selon un mode de réalisation le message téléphonique est émis directement par le déclencheur pour son propre compte. Dans ce cas, le déclencheur compose le message et l'émet vers le récepteur au travers d'un ou réseaux de téléphonie mobile.

Selon un autre mode de réalisation le message téléphonique est émis, pour le compte du déclencheur, par l'émetteur qui est une entité différente du déclencheur. Dans ce cas, le contenu du message téléphonique, ainsi que le numéro cible, sont communiqués à l'émetteur, par exemple par le déclencheur. L'émetteur réalise alors l'envoi du message.

L'étape de détection d'un motif préalablement mémorisé peut comprendre une détection d'un motif préalablement mémorisé dans le corps dudit message.

En effet, le motif peut être un motif se trouvant dans le corps du message, c'est-à-dire dans la partie affichée à l'utilisateur qui reçoit le message.

Le procédé selon l'invention peut comprendre, préalablement à la phase d'émission, pour au moins un déclencheur, une étape de mémorisation d'un motif en association avec ledit déclencheur.

Le motif peut être renseigné par le déclencheur, ou l'émetteur auquel est confié l'émission du message.

Alternativement, le motif peut être identifié par analyse des messages téléphoniques envoyés dans le passé pour le compte dudit déclencheur.

L'étape de détection d'un motif est réalisée par une technique de détection par logique floue.

Ainsi, un déclencheur peut être identifié même si le motif contenu dans le message téléphonique diffère légèrement du motif préalablement mémorisé pour ce déclencheur, par exemple pour des raisons d'affichage, de mise en page, ou encore du fait d'une altération dudit motif qui aurait pu être qui aurait pu être occasionnée par la mise en place d'un contournement frauduleux du routage attendu, etc.

Une telle technique de détection par logique floue permet avantageusement d'identifier au moins un motif préalablement mémorisé et attaché au déclencheur, par implémentation d'un ensemble de modèles et de techniques mathématiques pour inférer la présence ou non d'un tel motif sur la base de tout ou partie de caractéristiques du message téléphonique reçu ou d'éléments contenus dans ce dernier.

Au moins un motif peut comprendre un signe, un caractère alphanumérique, une chaîne de caractères alphanumériques, un mot, un ensemble de mots, une image, un son et/ou un contenu audiovisuel, etc. Par exemple, au moins un motif peut être le nom du déclencheur, un logo du déclencheur, un slogan du déclencheur, une adresse postale/internet du déclencheur, un numéro de téléphone du déclencheur, une phrase typiquement utilisée par le déclencheur, le nom d'un événement organisé par le déclencheur, etc.

Suivant des modes de réalisation non limitatifs, l'étape de vérification du mode terminaison peut comprendre une comparaison :
- de l'identifiant d'émetteur en réception, respectivement de l'identifiant de l'équipement de routage, déterminé à l'étape de détermination ;
- à au moins un identifiant d'émetteur ou une tranche d'identifiants d'émetteurs, respectivement à au moins un identifiant d'équipement de routage ou une tranche d'identifiants d'équipement de routage, dite(s) de référence, préalablement associé(s) audit déclencheur.

Alternativement, ou en plus, l'étape de vérification du mode de terminaison peut comprendre une comparaison :
- du type d'identifiant d'émetteur en réception déterminé à l'étape de détermination ;
- à un type d'identifiant d'émetteur en réception, dit de référence, préalablement associé(s) audit déclencheur.

Par exemple, un type d'identifiant d'émetteur en réception peut être :
- chaine de caractères numériques,
- chaîne de caractères alphanumériques, etc.
- numéro de téléphone court,
- numéro de téléphone long,
- numéro national,
- numéro international, etc.

L'identifiant d'émetteur en réception de référence, ou la tranche d'identifiants d'émetteur en réception de référence, ou le type d'identifiant(s) d'émetteur en réception de référence peut être renseigné par le déclencheur ou l'émetteur, ou détecté par analyse des messages téléphoniques envoyés dans le passé pour le compte dudit déclencheur.

L'identifiant d'équipement de routage de référence, ou la tranche d'identifiants d'équipement de routage de référence, peut être renseigné par le déclencheur ou l'émetteur, ou détecté par analyse des messages téléphoniques envoyés dans le passé pour le compte dudit déclencheur.

De manière générale, le message téléphonique peut être un message caractérisé par un identifiant d'émetteur, également appelé *« SenderID »,* et/ou un identifiant d'un équipement routage, également appelé *« Global Title* ». Avantageusement, le message téléphonique est un message au format PDU (*« Protocol Data Unit »*)*.*

Suivant un exemple de réalisation particulier, le message téléphonique peut être un message SMS ou MMS, et plus généralement un message téléphonique textuel.

Avantageusement, le procédé selon l'invention peut comprendre, avant la phase d'émission, une étape de sollicitation de l'envoi du message téléphonique, réalisée par une quatrième partie, dite solliciteur, auprès dudit déclencheur.

Cette étape de sollicitation peut être réalisée par, ou depuis, le site distant réalisant la phase d'analyse.

Cette étape de sollicitation peut être réalisée par le récepteur. Le solliciteur est en revanche avantageusement distinct du déclencheur et / ou de l'émetteur. Cela implique notamment que le motif à détecter est défini et intégré audit message téléphonique par le déclencheur et / ou par l'émetteur, et non par le solliciteur.

L'étape de sollicitation peut être, ou comprendre, une demande de modification d'un mot de passe ou d'un identifiant, une demande de création d'un espace utilisateur numérique, une demande réalisation d'une transaction financière, etc.

Plus généralement, l'étape de sollicitation peut être la réalisation de n'importe quelle opération dont la conclusion nécessite une étape d'identification à double facteur, ou de vérification à deux étapes, comprenant l'envoi d'un message téléphonique.

Ladite étape de sollicitation peut être avantageusement réalisée de manière automatisée, par exemple à l'aide de robots dits de sollicitation configurés pour interagir avec une application Web, un site Internet, etc. du déclencheur pour déclencher l'émission d'un message téléphonique. Alternativement, ladite étape de sollicitation pourrait ne pas être automatisée.

La mise en oeuvre d'une telle étape de sollicitation permet avantageusement une émission de messages téléphoniques par le déclencheur ou par l'émetteur pour le compte du déclencheur, qui est en réalité commandée, supervisée, par le solliciteur (éventuellement de manière anonyme).

Ainsi, le procédé de surveillance peut être avantageusement piloté par un tel solliciteur, de manière sensiblement transparente pour ledit déclencheur et / ou ledit émetteur, ce(s) dernier(s) n'ayant avantageusement pas connaissance de la mise en oeuvre dudit procédé de surveillance.

Une telle variante peut s'avérer intéressante, par exemple, dans le cas où la mise en oeuvre du procédé de surveillance du mode de terminaison d'un message téléphonique est pilotée par un opérateur de téléphonie (ou pour le compte de ce dernier) qui opère en pratique le réseau de réception du message téléphonique, et que cet opérateur souhaite vérifier que le déclencheur et / ou l'émetteur n'est pas éventuellement impliqué dans un contournement de mode de terminaison à son détriment. Le solliciteur en charge de l'étape de sollicitation peut alors être ledit opérateur de téléphonie lui-même, ou un acteur tiers chargé par l'opérateur de mettre en oeuvre ledit procédé de surveillance. Une telle étape de sollicitation permet ainsi avantageusement d'éviter une contre-détection par le déclencheur et / ou par l'émetteur de la mise en oeuvre d'une vérification du mode de terminaison d'un message téléphonique émis par l'un ou l'autre de ces derniers.

A ce titre, pourrait donc constituer, en tant que tel, une invention à part entière, un procédé de surveillance du mode de terminaison d'un message téléphonique, par exemple de type SMS ou MMS, émis vers un numéro de téléphonie mobile, dit numéro cible, lors d'une phase, dite d'émission, comprenant les étapes suivantes :
- émission, pour le compte d'une première partie, dite déclencheur, dudit message téléphonique audit numéro cible, ladite émission étant réalisée soit par ledit déclencheur, soit par une deuxième partie, dite émetteur ; et
- réception dudit message, par une troisième partie, dite récepteur, utilisant ledit numéro cible ;
ledit procédé comprenant une phase d'analyse comprenant les étapes suivantes :
- détection, dans ledit message, d'un motif préalablement mémorisé ;
- identification, à partir dudit motif, du déclencheur dudit message ;
- détermination, d'un identifiant d'émetteur en réception, et/ou d'un identifiant d'un équipement de routage, dudit message, par analyse dudit message ;
- vérification d'un mode de terminaison dudit message en fonction d'au moins un desdits identifiants et dudit déclencheur ;
ledit procédé comprenant, avant la phase d'émission, une étape de sollicitation de l'envoi du message téléphonique, réalisée par une quatrième partie, dite solliciteur, auprès dudit déclencheur.

Le procédé selon l'invention peut en outre comprendre une étape de mémorisation d'une donnée temporelle représentant le moment de la sollicitation.

La phase d'analyse peut alors être réalisée pour tous les messages reçus par le récepteur dans une fenêtre temporelle d'une durée prédéfinie commençant à partir dudit moment de la sollicitation.

En effet, lorsqu'une sollicitation est réalisée, le message téléphonique est généralement émis dans un lapse de temps très court après ladite sollicitation, typiquement d'une minute.

Par conséquent, la phase d'analyse peut porter uniquement sur les messages reçus par le numéro cible dans ce lapse de temps, ce qui diminue le nombre de messages téléphoniques à traiter lors de la phase d'analyse.

Alternativement, la phase d'analyse peut être réalisée pour tous les messages reçus par le numéro cible.

Suivant un mode de réalisation, la phase d'analyse peut être réalisée par un site distant du déclencheur, et/ou de l'émetteur et/ou du récepteur et/ou, le cas échéant, du solliciteur.

Dans ce cas, le message reçu par le récepteur est transmis audit site distant.

Le numéro cible peut être un numéro de téléphone utilisé par un utilisateur réel.

Alternativement, le numéro cible peut être un numéro dédié à des tests et utilisé par un robot ou un testeur.

### DESCRIPITION SOMMAIRE DES DESSINS

D'autres avantages et caractéristiques apparaîtront à l'examen de la description détaillée d'exemples nullement limitatifs, et des dessins annexés sur lesquels :
- La figure 1 est une représentation schématique d'un premier exemple de réalisation non limitatif d'un procédé selon l'invention ;
- la figure 2 est une représentation schématique d'un deuxième exemple de réalisation non limitatif d'un procédé selon l'invention ; et
- la figure 3 est une représentation schématique d'un exemple de réalisation non limitatif d'un système mettant en oeuvre le procédé selon l'invention.

### MANIERES DE REALISER L'INVENTION

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

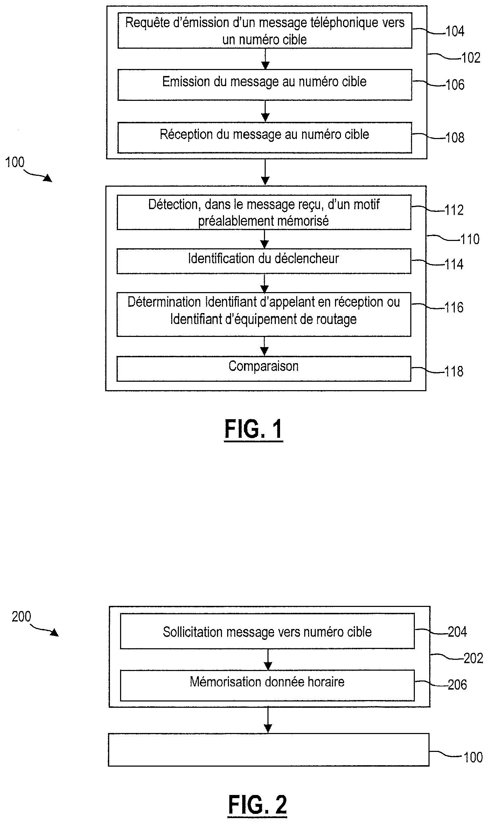

La figure 1 est une représentation schématique d'un premier exemple de réalisation non limitatif d'un procédé selon l'invention.

La figure 1 représente tout d'abord une phase 102 d'émission d'un message téléphonique vers un numéro cible.

Cette phase 102 peut ne pas faire partie du procédé selon l'invention.

La phase d'émission 102 comprend une étape 104 lors de laquelle un déclencheur émet, vers un émetteur, une requête d'émission d'un message téléphonique vers un numéro cible préalablement renseigné. Suivant un exemple de réalisation non limitatif, le déclencheur peut être une banque souhaitant vérifier l'identité d'un utilisateur et l'émetteur peut être une entité d'émission de messages téléphoniques, tel qu'un opérateur auquel la banque a confié l'émission de son trafic SMS par exemple.

Dans le procédé 100 de la FIGURE 1, le contenu du message est déterminé par le déclencheur.

Lors d'une étape 106, le message est émis par l'émetteur vers le numéro cible, que le déclencheur lui a fourni.

Le message émis circule dans un ou plusieurs réseaux de téléphonie mobile et est reçu par un appareil utilisant le numéro cible lors d'une étape 108.

Alternativement, à ce qui vient d'être décrit, le message téléphonique peut être émis directement par le déclencheur pour son propre compte. Dans ce cas, la phase d'émission 102 ne comprend pas l'étape 104.

Le procédé 100 comprend une phase 110 d'analyse du message reçu par le numéro cible en vue de déterminer le mode de terminaison dudit message.

Pour ce faire, une étape 112 réalise une détection d'un motif préalablement mémorisé. Pour ce faire, le ou chaque motif préalablement mémorisé est recherché dans le corps dudit message ou dans l'entête dudit message. La détection du ou de chaque motif peut être avantageusement réalisée par une technique de détection par logique floue.

Si, à l'étape 112, aucun motif préalablement mémorisé n'est identifié dans le message la phase 110 s'arrête.

Si, à l'étape 112, un motif préalablement mémorisé est identifié, alors lors d'une étape 114, le déclencheur associé à ce motif est identifié.

Lors d'une étape 116, le message téléphonique est analysé pour déterminer l'identifiant d'appelant en réception et/ou l'identifiant d'un équipement de routage du message téléphonique.

Ce ou ces identifiants déterminés lors de l'étape 116 sont comparés, à l'étape 118, à un ou des identifiants préalablement mémorisés en association avec le déclencheur identifié à l'étape 114.

En ce qui concerne l'identifiant d'appelant en réception, l'étape 114 peut réaliser une comparaison :
- dudit identifiant en réception à un identifiant en réception de référence, ou une tranche d'identifiants en réception de référence, préalablement mémorisé(e) pour le déclencheur ; ou
- du type dudit identifiant en réception au type d'identifiant en réception de référence préalablement mémorisé pour le déclencheur, à savoir un numéro court, un numéro long, un numéro national, un numéro international, etc.

En ce qui concerne l'identifiant de l'équipement de routage, l'étape 114 peut réaliser une comparaison dudit identifiant de l'équipement de routage à un identifiant d'équipement de routage de référence, ou une tranche d'identifiants d'équipement de routage de référence, préalablement mémorisé(e) pour le déclencheur.

Lorsqu'à l'étape 118, une différence est signalée par la ou les comparaisons réalisées, cela indique que le message téléphonique a été remis au numéro cible suivant un circuit qui diffère du circuit légitime utilisé pour le déclencheur. Cela correspond à une anomalie et compromet la sécurité et la confidentialité du message téléphonique.

Dans le cas contraire, le message téléphonique a été remis au numéro cible suivant un circuit légitime, et aucune anomalie n'est à signaler.

Dans le procédé 100, la phase d'analyse 110 peut être réalisée pour tel ou tel message reçu par le numéro cible, et sélectionné selon un critère donné, ou pour chaque message reçu par le numéro cible.

La figure 2 est une représentation schématique d'un deuxième exemple de réalisation nullement limitatif d'un procédé selon l'invention.

Le procédé 200, représenté sur la FIGURE 2, comprend toutes les étapes du procédé 100 de la FIGURE 1.

En plus, le procédé 200 comprend une phase 202, dite de stimulation, réalisée préalablement à la phase d'émission 102.

La phase de stimulation 202 comprend une étape 204 de sollicitation d'un message téléphonique vers un numéro cible.

Ladite étape 204 de sollicitation de l'envoi du message téléphonique, est avantageusement réalisée par une quatrième partie, dite solliciteur, auprès dudit déclencheur. Le solliciteur est avantageusement distinct du déclencheur et / ou de l'émetteur.

Par exemple, une telle étape de sollicitation peut consister en une ouverture d'un espace utilisateur auprès d'un déclencheur qui nécessite une identification à deux facteurs réalisant l'émission d'un message téléphonique avec un code d'authentification.

Le numéro cible peut être renseigné lors de cette étape 204.

La phase de stimulation 202 comprend également une étape 204 de mémorisation d'une donnée horaire de réalisation de l'étape de sollicitation 204 : cette donnée horaire peut par exemple être une donnée horaire de début ou de fin de réalisation de l'étape 204.

Ensuite, les étapes du procédé 100, telles que représentées sur la figure 1, sont réalisées.

Dans le procédé 200, la phase d'analyse 110 est appliquée uniquement aux messages reçus par le numéro cible pendant une fenêtre temporelle prédéterminée, par exemple de 1 ou 2 minutes, à partir de la donnée horaire mémorisée lors de l'étape 206.

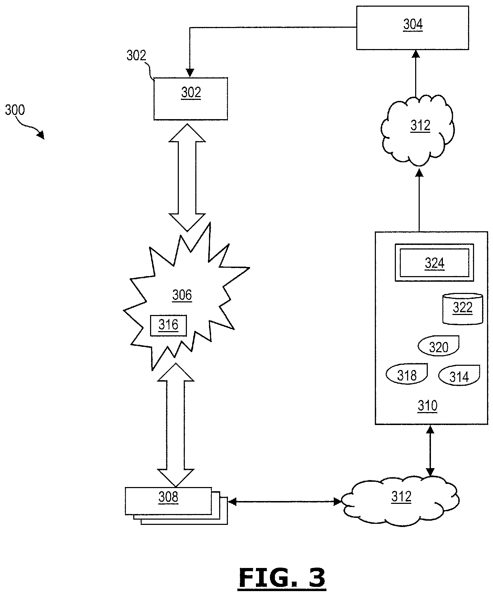

La figure 3 est une représentation schématique d'un exemple de réalisation non limitatif d'un système mettant en oeuvre le procédé selon l'invention.

Le système 300, représenté sur la FIGURE 3, comprend une partie 302, appelée émetteur, pour émettre un ou des messages téléphoniques, de type SMS ou MMS, pour le compte d'un déclencheur 304. Le déclencheur 304 peut, par exemple, être une interface ou un serveur d'authentification. L'émetteur 302 peut, par exemple, être un serveur d'émission de messages téléphoniques.

Le déclencheur 304 transmet à l'émetteur 302 le contenu du message à envoyer, ainsi que le numéro de téléphone cible auquel le message doit être envoyé. L'émetteur 302 encapsule ce contenu dans un message téléphonique et l'émet au travers d'un ou plusieurs réseaux de téléphonie mobile 306 vers le numéro cible renseigné par le déclencheur 304.

Le système 300 comprend en outre un ou plusieurs robots de test 308, exploitant le(s) numéro(s) cible(s) et prévu(s) pour recevoir le(s) message(s) envoyé(s) par l'émetteur 302. Les robots 308 sont reliés à un site/serveur central 310, distant desdits robots, au travers d'un réseau de communication 312, de type Internet. Le ou les messages téléphoniques reçus par les robots 308 sont transmis au serveur central 310 pour analyse.

Le serveur central 310 comprend des moyens pour réaliser les étapes de la phase d'analyse du procédé selon l'invention. En particulier, le serveur 310 comprend :
- un analyseur 314, logiciel et/ou matériel, pour analyser un message en vue de déterminer le numéro d'émetteur en réception du message, et/ou le numéro d'un équipement de routage 316 du réseau de téléphonie 306 ;
- un analyseur de message 318, logiciel et/ou matériel, pour identifier, détecter, dans le message téléphonique un motif préalablement mémorisé, avantageusement par une technique de détection par logique floue ;
- un comparateur 320 pour une comparaison entre des identifiants d'appelant en réception et/ou des identifiants d'équipement de routage, à des identifiants de référence préalablement mémorisés ;
- une mémoire 322 pour mémoriser pour chaque déclencheur un ou plusieurs motifs, et un ou plusieurs identifiants d'appelants en réception de référence et/ou un ou plusieurs identifiants d'équipements de routage de référence.

Le serveur central 310 peut en outre être relié au déclencheur 304 au travers d'un réseau de communication, tel que par exemple le réseau de type Internet 312, pour solliciter l'émission d'un message téléphonique vers un des robots 308.

Pour ce faire, le serveur central 310 peut comprendre un moteur de sollicitation 324 qui se connecte au déclencheur pour y générer des opérations amenant le déclencheur 304 à déclencher une requête d'émission d'un message téléphonique, tel que par exemple une création d'un espace utilisateur, une génération d'une transaction financière, etc.

Dans ce cas, ledit moteur de sollicitation 324 transmet alors au déclencheur le numéro cible vers lequel ledit message téléphonique doit être émis.

Bien entendu, l'invention est uniquement définie par les revendications ci-jointes, mais n'est pas limitée aux exemples qui viennent d'être décrits.

### POSSIBILITE D'APPLICATION INDUSTRIELLE

L'invention trouve son application dans le domaine des communications non synchronisées émises vers des numéros de téléphone mobile, et en particulier dans le domaine des communications par messages téléphoniques tels que par exemple des messages SMS ou MMS. Plus spécifiquement encore, l'invention trouve son application dans le domaine des procédés de surveillance du mode de terminaison d'un message téléphonique.

## Revendications

1. - Procédé (100 ; 200) de surveillance du mode de terminaison d'un message téléphonique, par exemple de type SMS ou MMS, émis vers un numéro de téléphonie mobile, dit numéro cible, c'est-à-dire la manière selon laquelle un message téléphonique est routé, acheminé, jusqu'à un numéro cible, c'est-à-dire par l'intermédiaire de quel moyen technique en particulier ou de quelle succession particulière de moyens techniques, intégrés dans ou interfacés avec un ou plusieurs réseaux de télécommunications, ledit message téléphonique est effectivement acheminé jusqu'audit numéro cible, **caractérisé en ce que** ledit message téléphonique est émis lors d'une phase (102), dite d'émission, comprenant les étapes suivantes :
- émission, pour le compte d'une première partie, dite déclencheur (304), dudit message téléphonique audit numéro cible, ladite émission étant réalisée soit par ledit déclencheur (304), soit par une deuxième partie, dite émetteur ; et
- réception (108) dudit message, par une troisième partie (308), dite récepteur, utilisant ledit numéro cible ;
ledit procédé (100 ; 200) comprenant une phase d'analyse (110) comprenant les étapes suivantes :
- détection (112), dans ledit message, d'un motif préalablement mémorisé et associé audit déclencheur (304), comprenant un signe, un caractère alphanumérique, une chaîne de caractères alphanumériques, un mot, ou ensemble de mots, une image, un son, et/ou un contenu audiovisuel, laquelle étape de détection d'un motif est réalisée par une technique de détection par logique floue;
- identification (114), à partir dudit motif, du déclencheur (304) dudit message ;
- détermination (116), d'un identifiant d'émetteur en réception, et/ou d'un identifiant d'un équipement de routage (316), dudit message, par analyse dudit message ;
- vérification (118) d'un mode de terminaison dudit message en fonction d'au moins un desdits identifiants et dudit déclencheur (304).

2. - Procédé (100 ; 200) selon la revendication précédente, **caractérisé en ce que** l'étape (112) de détection d'un motif comprend une détection d'un motif préalablement mémorisé dans le corps dudit message.

3. - Procédé (100 ; 200) selon l'une quelconque des revendications précédentes, **caractérisé en ce qu'**il comprend, préalablement à la phase d'émission (102), pour au moins un déclencheur, une étape de mémorisation d'un motif en association avec ledit déclencheur (304).

4. - Procédé (100 ; 200) selon l'une quelconque des revendications précédentes, **caractérisé en ce que** l'étape (118) de vérification comprend une comparaison :
- de l'identifiant d'émetteur en réception, respectivement de l'identifiant de l'équipement de routage (316), déterminé à l'étape (116) de détermination ;
- à au moins un identifiant d'émetteur ou une tranche d'identifiants d'émetteurs, respectivement à au moins un identifiant d'équipement de routage (316) ou une tranche d'identifiants d'équipement de routage (316), dit(s) de référence, préalablement associé(s) audit déclencheur (304).

5. - Procédé (100 ; 200) selon l'une quelconque des revendications précédentes, **caractérisé en ce que** l'étape (118) de vérification comprend une comparaison :
- du type d'identifiant d'émetteur en réception déterminé à l'étape (116) de détermination ;
- à un type d'identifiant d'émetteur en réception dit de référence, préalablement associé(s) audit déclencheur (304).

6. - Procédé (100 ; 200) selon l'une quelconque des revendications précédentes, **caractérisé en ce que** le message téléphonique est un message SMS ou MMS.

7. - Procédé (200) selon l'une quelconque des revendications précédentes, **caractérisé en ce qu'**il comprend, avant la phase (102) d'émission, une étape (204) de sollicitation de l'envoi du message téléphonique, réalisée par une quatrième partie (310), dite solliciteur, auprès dudit déclencheur (304).

8. - Procédé (200) selon la revendication précédente, **caractérisé en ce qu'**il comprend une étape de mémorisation (206) d'une donnée temporelle représentant le moment de la sollicitation, la phase d'analyse (110) étant réalisée pour tous les messages reçus par le récepteur (308) dans une fenêtre temporelle d'une durée prédéfinie commençant à partir dudit moment de la sollicitation.

9. - Procédé (100 ; 200) selon l'une quelconque des revendications précédentes, **caractérisé en ce que** la phase d'analyse (110) est réalisée par un site (310) distant du déclencheur (304) et/ou de l'émetteur (302) et/ou du récepteur (308) et/ou, le cas échéant, du solliciteur (310).

## Patentansprüche

1. Verfahren (100 ; 200) zur Überwachung eines Terminierungsmodus einer Telefonnachricht, beispielsweise des Typs SMS oder MMS, die an eine Mobiltelefonnummer, Zielnummer genannt, gesendet wird, das heißt die Art, in welcher eine Telefonnachricht bis zu einer Zielnummer geroutet, geleitet wird, das heißt durch welche besonderen technischen Mittel oder welche besondere Abfolge von technischen Mitteln, die in ein oder mehrere Telekommunikationsnetze integriert sind oder mit diesen verbunden sind, wobei besagte Telefonnachricht tatsächlich bis zu besagter Zielnummer geleitet wird, **dadurch gekennzeichnet, dass** besagte Telefonnachricht während einer Phase (102), Sendephase genannt, gesendet wird, welche die folgenden Schritte umfasst:
- Senden besagter Telefonnachricht im Auftrag eines ersten Teilnehmers, Auslöser (304) genannt, an besagte Zielnummer, wobei besagtes Senden entweder durch besagten Auslöser (304) oder durch einen zweiten Teilnehmer, Sender genannt, realisiert wird; und
- Empfangen (108) besagter Nachricht durch einen dritten Teilnehmer (308), Empfänger genannt, mit Verwendung besagter Zielnummer;
wobei besagtes Verfahren (100; 200) eine Analysephase (110) umfasst, welche die folgenden Schritte umfasst:
- Erkennen (112) eines zuvor gespeicherten und mit besagtem Auslöser (304) assoziierten Musters in besagter Nachricht, umfassend ein Zeichen, ein alphanumerisches Zeichen, eine alphanumerische Zeichenkette, ein Wort oder eine Gruppe von Wörtern, ein Bild, einen Ton und/oder einen audiovisuellen Inhalt umfasst, wobei der Schritt des Erkennens eines Musters durch eine Fuzzy-Logic-Erkennungstechnik realisiert wird;
- Identifizierung (114) des Auslösers (304) der Nachricht anhand besagten Musters;
- Bestimmung (116) einer Kennung des empfangenden Senders und/oder einer Routingausrüstungs-Kennung (316) besagter Nachricht durch Analyse besagter Nachricht;
- Verifizierung (118) eines Terminierungsmodus besagter Nachricht in Abhängigkeit von mindestens einer der besagten Kennungen und besagtem Auslöser (304).

2. Verfahren (100; 200) nach dem vorhergehenden Anspruch, **dadurch gekennzeichnet, dass** der Schritt (112) des Erkennens eines Musters das Erkennen eines Musters umfasst, das zuvor in dem Körper besagter Nachricht gespeichert wurde.

3. Verfahren (100; 200) nach einem der vorhergehenden Ansprüche, **dadurch gekennzeichnet, dass** es vor der Sendephase (102) für mindestens einen Auslöser einen Schritt des Speicherns eines Musters in Assoziierung mit besagtem Auslöser (304) umfasst.

4. Verfahren (100; 200) nach einem der vorhergehenden Ansprüche, **dadurch gekennzeichnet, dass** der Schritt (118) der Verifizierung einen Vergleich umfasst:
- der Kennung des empfangenden Senders beziehungsweise der Routingausrüstung-Kennung (316), die in dem Bestimmungs-Schritt (116) bestimmt wird;
- mit mindestens einer Sender-Kennung oder einer Tranche von Sender-Kennungen bzw. mit mindestens einer Routingausrüstungs-Kennung (316) oder einer Tranche von Routingausrüstungs-Kennungen (316), Referenz-Kennungen genannt, die zuvor mit besagtem Auslöser (304) assoziiert wurden.

5. Verfahren (100; 200) nach einem der vorhergehenden Ansprüche, **dadurch gekennzeichnet, dass** der Schritt (118) der Verifizierung einen Vergleich umfasst:
- des Kennungstyp des empfangenden Senders, die in dem Schritt (116) der Bestimmung bestimmt wurde;
- mit einem Typ einer sogenannten Referenz-Kennung des empfangenden Senders, die zuvor mit dem Auslöser (304) assoziiert wurde(n).

6. Verfahren (100; 200) nach einem der vorhergehenden Ansprüche, **dadurch gekennzeichnet, dass** die Telefonnachricht eine SMS- oder MMS-Nachricht ist.

7. Verfahren (200) nach einem der vorhergehenden Ansprüche, **dadurch gekennzeichnet, dass** es vor der Sendephase (102) einen Schritt (204) zur Anforderung des Versands der Telefonnachricht umfasst, der von einem vierten Teilnehmer (310), Anforderer genannten, bei dem besagten Auslöser (304) realisiert wird.

8. Verfahren (200) nach dem vorhergehenden Anspruch, **dadurch gekennzeichnet, dass** es einen Schritt des Speicherns (206) einer Zeitangabe umfasst, die den Zeitpunkt der Anforderung repräsentiert, wobei die Analysephase (110) für alle Nachrichten durchgeführt wird, die von dem Empfänger (308) in einem Zeitfenster einer vordefinierten Dauer, das mit dem Zeitpunkt der Anforderung beginnt, empfangen werden.

9. Verfahren (100; 200) nach einem der vorhergehenden Ansprüche, **dadurch gekennzeichnet, dass** die Analysephase (110) von einer Stelle (310) durchgeführt wird, die von dem Auslöser (304) und/oder von dem Sender (302) und/oder von dem Empfänger (308) und/oder gegebenenfalls von dem Anforderer (310) entfernt ist.

## Claims

1. A method (100; 200) for monitoring the termination mode of a telephone message, for example of the SMS or MMS type, sent to a mobile telephone number, called the target number, that is to say the manner in which a telephone message is routed, forwarded, to a target number, that is to say by means of which technical means in particular or which particular succession of technical means, integrated into or interfaced with one or more telecommunications networks, said telephone message is actually forwarded to said target number, **characterized in that** said telephone message is sent during a phase (102), called the sending phase, comprising the following steps:
- sending, on behalf of a first party, called the trigger (304), said telephone message to said target number, said sending being carried out either by said trigger (304) or by a second party, called the transmitter; and
- receiving (108) said message, by a third party (308), called the receiver, using said target number;
said method (100; 200) comprising an analysis phase (110) comprising the following steps:
- detecting (112), in said message, a pattern previously stored and associated with said trigger (304), comprising a sign, an alphanumeric character, a string of alphanumeric characters, a word, or set of words, an image, a sound, and/or an audiovisual content, which step of detecting a pattern is carried out by a fuzzy logic detection technique;
- identifying (114), from said pattern, the trigger (304) of said message;
- determining (116), a transmitter identifier on reception, and/or an identifier of a routing equipment (316), of said message, by analysis of said message;
- verifying (118) a termination mode of said message as a function of at least one of said identifiers and of said trigger (304).

2. The method (100; 200) according to the preceding claim, **characterized in that** the step (112) of detecting a pattern comprises a detection of a pattern previously stored in the body of said message.

3. The method (100; 200) according to any one of the preceding claims, **characterized in that** it comprises, prior to the transmission phase (102), for at least one trigger, a step of storing a pattern in association with said trigger (304).

4. The method (100; 200) according to any one of the preceding claims, **characterized in that** the verification step (118) comprises a comparison:
- of the transmitter identifier in reception, respectively of the identifier of the routing equipment (316), determined in the determination step (116);
- to at least one transmitter identifier or a range of transmitter identifiers, respectively to at least one routing equipment identifier (316) or a range of routing equipment identifiers (316), called reference, previously associated with said trigger (304).

5. The method (100; 200) according to any one of the preceding claims, **characterized in that** the verification step (118) comprises a comparison:
- of the type of transmitter identifier in reception determined in the determination step (116);
- to a type of transmitter identifier in reception called reference, previously associated with said trigger (304).

6. The method (10; 200) according to any one of the preceding claims, **characterized in that** the telephone message is an SMS or MMS message.

7. The method (200) according to any one of the preceding claims, **characterized in that** it comprises, before the transmission phase (102), a step (204) of soliciting the sending of the telephone message, carried out by a fourth party (310), called the solicitor, to said trigger (304).

8. The method (200) according to the preceding claim, **characterized in that** it comprises a step of storing (206) a temporal data item representing the time of the solicitation, the analysis phase (110) being carried out for all the messages received by the receiver (308) in a time window of a predefined duration starting from said time of the solicitation.

9. The method (100; 200) according to any one of the preceding claims, **characterized in that** the analysis phase (110) is carried out by a site (310) remote from the trigger (304) and/or the transmitter (302) and/or the receiver (308) and/or, where appropriate, the solicitor (310).
